(19)

Europäisches
Patentamt
European
Patent Office
Office européen
des brevets

(11)  EP 2 770 655 A1

(12)  **EUROPEAN PATENT APPLICATION**

(43) Date of publication:
**27.08.2014 Bulletin 2014/35**

(21) Application number: **13290037.4**

(22) Date of filing: **22.02.2013**

(51) Int Cl.:
*H04J 14/02* (2006.01)       *H04B 10/2575* (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Petton, Pierre-Yves**
**91620 Nozay (FR)**
• **Keuer, Laurent**
**78141 Velizy (FR)**

• **Vigier, Alain**
**78141 Velizy (FR)**
• **Cameirao, Pedro**
**2750-834 Cascais (PT)**

(74) Representative: **Croonenbroek, Thomas Jakob et al**
**Innovincia**
**11, avenue des Tilleuls**
**74200 Thonon-les-Bains (FR)**

Remarks:
Amended claims in accordance with Rule 137(2) EPC.

(54)  **Method to transmit a signal in a mobile network**

(57)  The invention has for object a method to transmit a signal from a mobile network antenna remote radio head (4) to a base band unit (12) with the steps:
- a first interface unit (6) converts a digitized radio signal of the remote radio head (4) into a first optical transport signal,
- a first wavelength division multiplexing unit (5) multiplexes the first optical transport signal with a second optical transport signal from an optical network termination (7) of an optical network (8),
- an optical line structure (9) transmits the multiplexed optical signals to a second wavelength division multiplexing unit (11),
- the second wavelength division multiplexing unit (11) demultiplexes the first optical transport signal from the multiplexed optical signals,
- a second interface unit (10) converts the first optical transport signal into a digitized radio signal and transmits the digitized radio signal to at least one base band unit (12).

The invention also has for object the corresponding method to transmit a signal from a base band unit (12) to a mobile network antenna remote radio head (4) and associated telecommunication network.

Fig. 1

**Description**

The invention relates to telecommunications and more particularly to mobile network architectures and associated method.

In recent wireless base stations for centralized wireless network architectures, the base band units (BBUs), which manage the base bands available for mobile terminals, are separated and physically remote from remote radio heads (RRHs). In said solutions, the radio front end and the analogue to digital interface are part of the remote radio head.

The base band units and the remote radio heads are connected via digital signal networks. Said digital signal networks convey digitized complex in phase (*I*) and quadrature phase (*Q*) samples.

The digital signal is usually encoded and transported using the Common Public Radio Interface (CPRI) scheme. It allows different network architectures and is based on Time Division Multiple Access (TDMA). The CPRI frames transport *I/Q* samples. Using CPRI terminology, a remote radio head is a Radio Equipment (RE) and the base band unit is a Remote Equipment Controller (REC).

A known way to connect the remote radio head and the base band unit is to use optical fibres as point-to-point links. Since a base band unit cabinet or hostel is usually connected to a plurality of remote radio heads, there may be multiple fibre lines for one considered base band unit hostel while the bandwidth of the separate fibres may not be used efficiently. It is in particular known to use optical multiplexing so as to reduce the number required fibres.

However an important amount of fibres still needs to be deployed, said deployment being costly and implying long civil works.

In order to overcome the aforementioned drawbacks, the invention has for object a method to transmit a signal from a mobile network antenna remote radio head to a base band unit with the steps:

- a first interface unit converts a digitized radio signal of the remote radio head into a first optical transport signal,

- a first wavelength division multiplexing unit multiplexes the first optical transport signal with a second optical transport signal from an optical network termination of an optical network,

- an optical line structure transmits the multiplexed optical signals to a second wavelength division multiplexing unit,

- the second wavelength division multiplexing unit demultiplexes the first optical transport signal from the multiplexed optical signals,

- a second interface unit converts the first optical transport signal into a digitized radio signal and transmits the digitized radio signal to at least one base band unit;

and the associated method to transmit a signal from a base band unit to a mobile network antenna remote radio head with the steps:

- at least one base band unit emits a digitized radio signal,

- a second interface unit converts the digitized radio signal into a first optical transport signal and transmits said optical transport signal to second wavelength division multiplexing unit,

- the second wavelength division multiplexing unit multiplexes the fist optical transport signal with a second optical transport signal from an optical line termination of an optical network,

- an optical line structure transmits the optical transport signal to a first wavelength division multiplexing unit of the optical network,

- the first wavelength division multiplexing unit demultiplexes the first optical transport signal from the multiplexed optical signals,

- a first interface unit converts the first optical transport signal into a digitized radio signal, and sends said digitized radio signal to a remote radio head.

Said methods allow to use already deployed optical lines structures in base band unit centralizing network architectures.

The method may feature one or more of the following characteristics, taken in combination or separately.

The digitized radio signal is a Common Public Radio Interface (CPRI) protocol signal.

The first optical transport signal is an Optical Transmission Unit 2 (OTU2) signal.

The second optical transport signal is one of the following : a Gigabit Passive Optical Network (GPON) signal, a ten Gigabit Passive Optical Network (XGPON) signal, an Optical Time domain Reflectometer (OTDR) signal or a CAble TeleVision (CATV) signal.

The optical transport signal is in the wavelength domain between 1500 and 1550nm.

The first interface unit collects and aggregates the digitized radio signal emitted by multiple remote radio heads and converts the aggregated digital electronic signals into the first optical transport signal and converts the first optical transport signal into digitized radio signals and distributes them to the respective remote radio heads.

The invention also has for object the associated telecommunication network comprising :

- at least one remote radio head configured to convert an analogue radio signal from an antenna into a digitized radio signal,

- a first interface unit connected to the remote radio head and configured to convert the digitized radio signal into a first optical transport signal and vice-versa,

- an optical network comprising :

    - a first wavelength multiplexing unit connected to the interface unit, configured to multiplex and/or demultiplex the first optical transport signal from or into a multiplexed optical signal with at least a second optical transport signal,

    - an optical network termination connected to the interface unit, configured to emit and/or receive the second optical transport signal,

    - an optical line structure connected to the first wavelength multiplexing unit,

    - a second wavelength multiplexing unit connected to the optical line structure, configured to multiplex and/or demultiplex the first optical transport signal from or into a multiplexed optical signal with at least the second optical transport signal,

    - an optical line termination, configured to emit and/or receive the second optical transport signal,

- a second interface unit configured to convert the optical transport signal into a digitized radio signal and vice-versa,

- and at least one base band unit connected to the second interface unit configured to receive and/or emit the digitized radio signal.

A plurality of remote radio heads of mobile network antennae may be connected to the first interface unit, and in which the first interface unit is configured to collect and aggregate the digitized radio signal emitted by the remote radio heads and convert the aggregated digital electronic signals in a first optical transport signal, and to convert the first optical transport signal into a plurality of digitized radio signals and scatter the digitized radio signals to the plurality of remote radio heads.

At least one of the wavelength multiplexing units may comprise elementary two entry multiplexers arranged in serial fashion.

At least one of the wavelength multiplexing units may comprise elementary two-entry multiplexers arranged in cascading fashion.

Other characteristics and advantages of the invention will appear at the reading of the description of the following figures, among which:

- Figure 1 is a diagram illustrating a system including remote radio-heads (RRH) and a base band unit (BBU), an optical network, and first and second interface units,
- Figure 2 is a diagram illustrating in more detail the first interface unit shown in Figure 1,
- Figure 3 is a diagram illustrating in further detail the first interface unit shown in Figure 2,
- Figure 4 is a flow-chart illustrating compression of CPRI formatted radio data,
- Figure 5 is a diagram illustrating multiplexing and encapsulation of the compressed radio data into an optical data unit for transmission over the optical network,
- Figure 6 is a diagram illustrating in further detail the second interface unit shown in Figure 1,
- Figure 7 is a diagram illustrating the decompression of radio data into CPRI formatted radio data,
- Figure 8 is a schematic of a spectrum for bandwidth occupation of the signals in the optical network,
- Figure 9 is a schematic of a particular embodiment of a multiplexer/demultiplexer according to the invention,
- Figure 10 is a schematic of another particular embodiment of a multiplexer/demultiplexer according to the invention,
- Figure 11 is a diagram illustrating an example of switching by the interface units shown in Figure 1 (switching is to a single BBU),
- Figure 12 is a diagram illustrating switching by the interface units in a second embodiment of the invention,
- Figure 13 is a diagram illustrating switching by the interface units in a third embodiment of the invention, and
- Figure 14 is a diagram illustrating switching by the interface units in a fourth embodiment of the invention.

On all figures, the same element is referred to with the same number.

Detailed Description

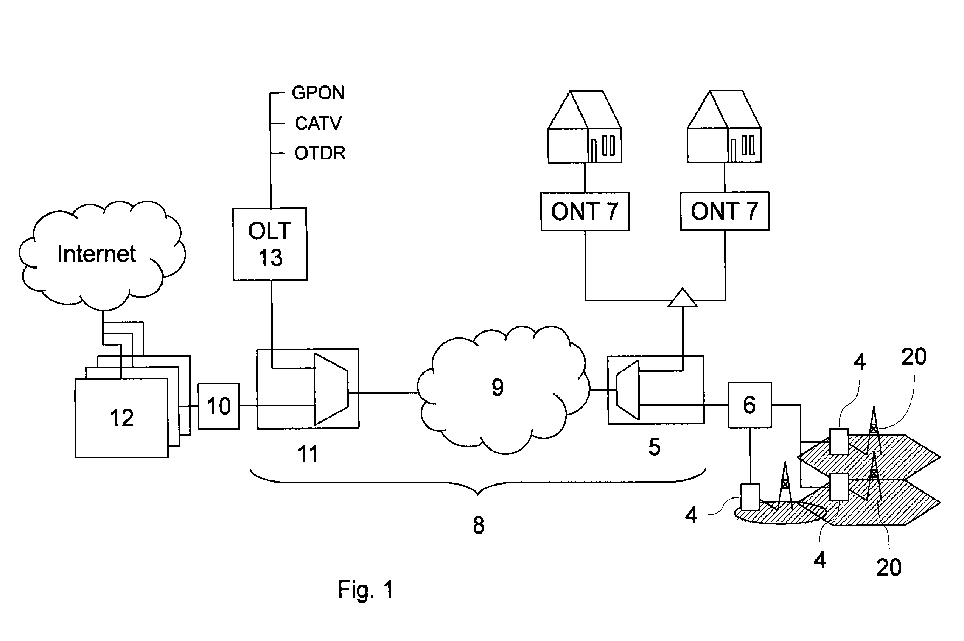

Figure 1 shows schematically an example of a network architecture according to one aspect of the invention.

In said figure are represented mobile network antennae 20, connected to associated remote radio heads (RRH) 4. The RRH 4 are situated here at antenna 20 level, as close as possible to the emitters/receivers. The RRH 4 are connected to a first interface unit 6. Said interface unit 6 is in turn connected to an optical network 8.

The optical network 8 comprises a first wavelength division multiplexing (WDM) unit 5, connected to the interface unit 6 via an optical fibre line. The first WDM unit 5 is also connected to a plurality of optical network terminations ONT 7 of the optical network 8, and to a passive optical lines structure 9 (ODN) of the optical network 8.

The optical lines structure 9 essentially comprises a network of optical fibres and the associated splitters.

A second WDM unit 11 is connected to the optical line structure 9, at another end of said optical line structure 9. Said second WDM unit 11 is also connected to an optical line termination OLT 13, and to a second interface unit 10. Said second interface unit 10 is connected to at least one base band unit 12, here in particular several from a BBU 12 pool or cabinet. The BBUs 12 are in turn connected to the internet.

The paths from the antennae 20 to the BBU 12 are considered upstream, while the paths from the BBU 12 to the antennae 20 are considered downstream.

The antennae 20 comprise radio frequency emitters and receivers, for implementing mobile network access to mobile terminals (cellular or smartphones, electronic pads, laptops).

Remote radio-head (RRH) and Base band Unit (BBU)

In the discussed examples, the remote radio-head (RRH) 4 does not perform BBU 12 functionality, for example does not perform physical layer processing that is specific to any particular wireless technology. Furthermore, in this example no control signalling is exchanged between the remote radio-heads 4 and base band units 12. Therefore, the BBU 12 and RRH exchange a digitized radio signal, emitted in electronic (coax) or point-to-point optical signal form.

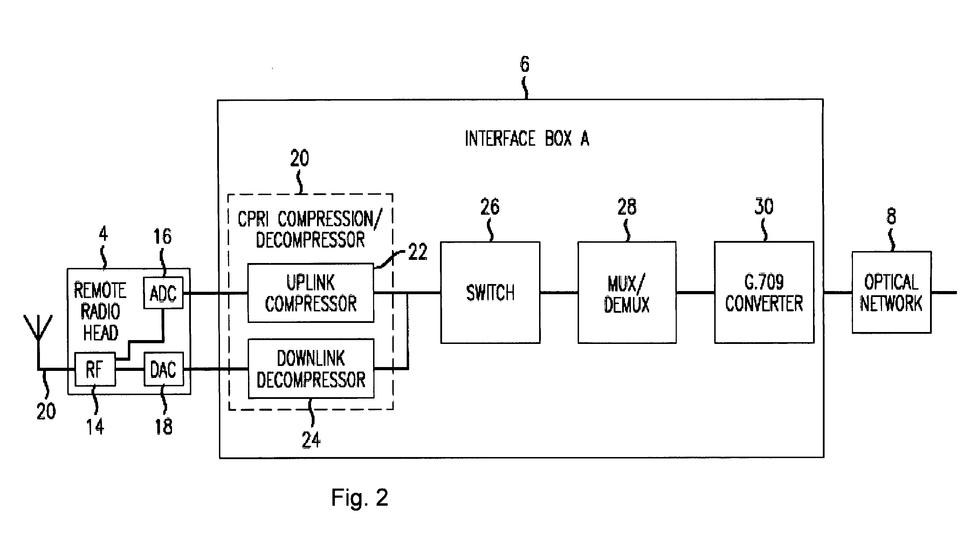

As shown in Figure 2, each remote radio head 4, one of which is shown for simplicity, includes conventional circuitry.

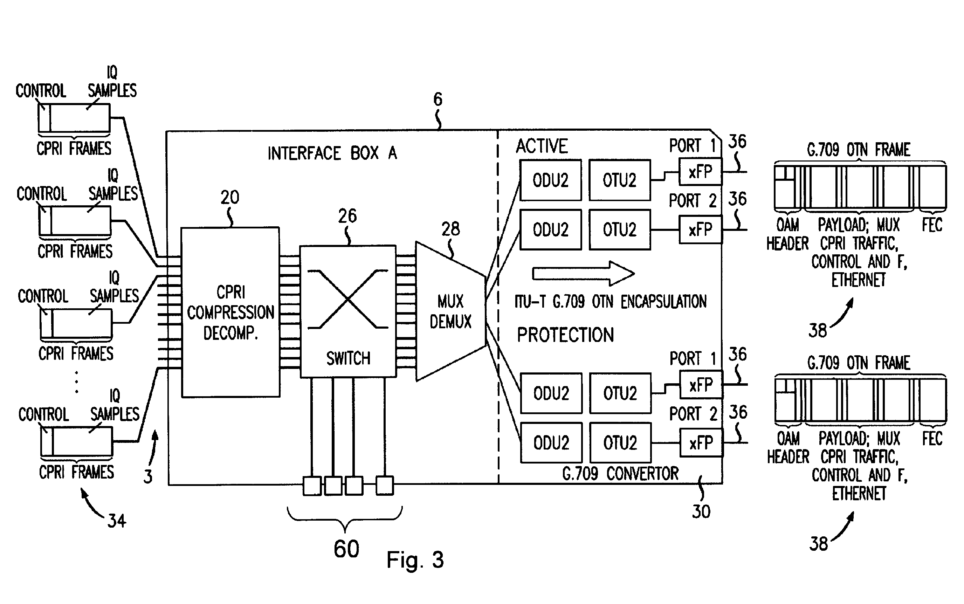

For example, on the uplink, the RRH 4 includes a radio-frequency front-end 14 and an analog-to digital converter (ADC) 16 that converts the received analog radio signal into digital I/Q sample form in a known data frame format consistent with the Common Public Radio Interface (CPRI) Standard. In this example, the known CPRI basic frame format is used, illustrated on the left hand side of Figure 3. (In other examples, other known CPRI frame formats in which to carry I/Q data may be used instead). The CPRI frames are provided to the first interface unit 6 for data transmission via the optical network 8 and second interface unit 10 to the base band unit 12. This is described in more detail later below.

Conversely on the downlink, the BBU 12 includes conventional circuitry namely a transmitter which generates I/Q samples in data frames of CPRI format.

These frames are provided to the second interface unit 10 for data transmission via the optical network 8 and first interface unit 6 to the remote radio-head (RRH) 4. The conventional remote radio-head (RRH) includes a digital to analogue converter (DAC) to convert the signal to radio frequency signals transmitted via antenna 20.

The RRH radio frequency front end, ADC, DAC and the BBU processing are known, there being nothing in those subsystems implemented to accommodate compression and packing into G.709 standard optical data units (ODUs) for transport over theoptical network nor unpacking and decompression to provide data in CPRI frame format once more.

Optical Network

The Optical Network 8 may be in particular one in accordance with the ITU-T Recommendation G.709 standard as at the first filing date of this patent application. The optical network 8 may be G.709 compliant, and the optical transport signal thus encoded in G.709 compliant structures.

In the example, the optical network may comprise a Passive Optical Network (PON).

The optical network 8 may be a Fibre-to-the-x (FTTx) infrastructure, here a fibre-to-the-home FFTH as the ONTs 7 are connected to homes 7a. In further examples the optical network may be based on point-to-point (P2P) fibres.

In the optical network 8 standards there are several standardised line rates, one of which is denoted Optical Transport Unit 2 (OTU2) which is approximately 10.709 Gigabits/second. OTU2 may be considered as a data structure into which another data structure, namely an Optical Data Unit2 (ODU2) is mapped. The ODU2 signal is a server layer signal for client signals. An ODU2 may transport a stream of packets, such as STMxx, Ethernet, MPLS, Internet Protocol, or Common Public Radio Interface (CPRI) packets.

Interface units

The interface units 6, 10 are bi-directional; however, it will be noted that uplink and downlink processing for transmission by the optical network 8 operate in essentially the same manner. Similarly, uplink and downlink processing upon reception from the optical network 8 operates in essentially the same manner. Accordingly, basically speaking, a single instance of processing for transmission by the optical network 8 (namely uplink) and a single instance of processing upon reception from the optical network 8 (namely uplink) will be described for the sake of brevity.

In this example, Uplink denotes the direction towards the base band unit. Downlink denotes the direction towards the RRH.

The interface units may be either implemented in separate boxes or partially or completely integrated in the other network elements, in particular the RRH 4, the WDM units 5, 11 or the BBU 12.

A first embodiment, not represented, foresees that the interface unit 6 connected to the RRH 4 merely comprises an electronic to optical signal converter, possibly integrated in said RRH 4, for example a SFP/XFP (Small Form Factor Pluggable) transceiver, which converts the digitized radio signal of the RRH 4 into an optical transport signal conveyed through the optical network 8 (and in reverse for downlink). The interface unit 10 connected to the BBU 12 may also comprise a SFP/XFP transceiver to convert the optical transport signal received into the digitized radio signal and vice-versa.

A more elaborated example, to potentially manage in parallel multiple RRHs 4, is shown in Figure 2, the interface unit 6 connected to the remote radio-heads (RRH) 4 includes a CPRI compressor/decompressor 20 which, in this example, may be considered to consist of an uplink compressor 22 and a downlink decompressor 24. The uplink compressor 22 is connected to the ADC 16 of the RRH 4. The downlink decompressor 24 is connected to the DAC 18 of the RRH 4.

The compressor 22 and decompressor 24 are connected to a switch 26 which is connected to a multiplexer/demultiplexer (MUX/DEMUX) 28 which is connected to a G.709 converter 30.

Figure 3 shows the interface unit 6 in more detail. As shown in Figure 3, in this example CPRI frames 34 are input via twelve CPRI input links 3 into the CPRI compressor/decompressor 20. There are twelve links between the CPRI compressor/decompressor 20 and a switch 26 that has twelve links to the MUX/DEMUX 28. The CPRI links 3 each operate at a local CPRI rate 2.7. In this example, each remote radio head 4 provides one or two CPRI links to the first interface unit 6.

For completeness, we mention here that various numbers of CPRI links are envisaged. In another embodiment, for example, eighteen links are provided used by multiple radio heads 4 that each use one or two of the CPRI links. Of course, the skilled reader will appreciate that, in other examples, radio heads may be connected to an interface unit 6 using different numbers of CPRI links, and/or different numbers of remote radio heads 4 may be connected to the interface unit. The skilled reader will also understand that in some further embodiments more than one remote radio head 4 may be connected to a CPRI link, for example by being daisy-chained.

The switch 26 and MUX/DEMUX 28 act to control to which Optical Data Unit ODU2 the CPRI frames are directed.

We now describe the compression in more detail before describing how the compressed CPRI frames are converted into ODU2 frames for transmission by the optical network 8.

Compression

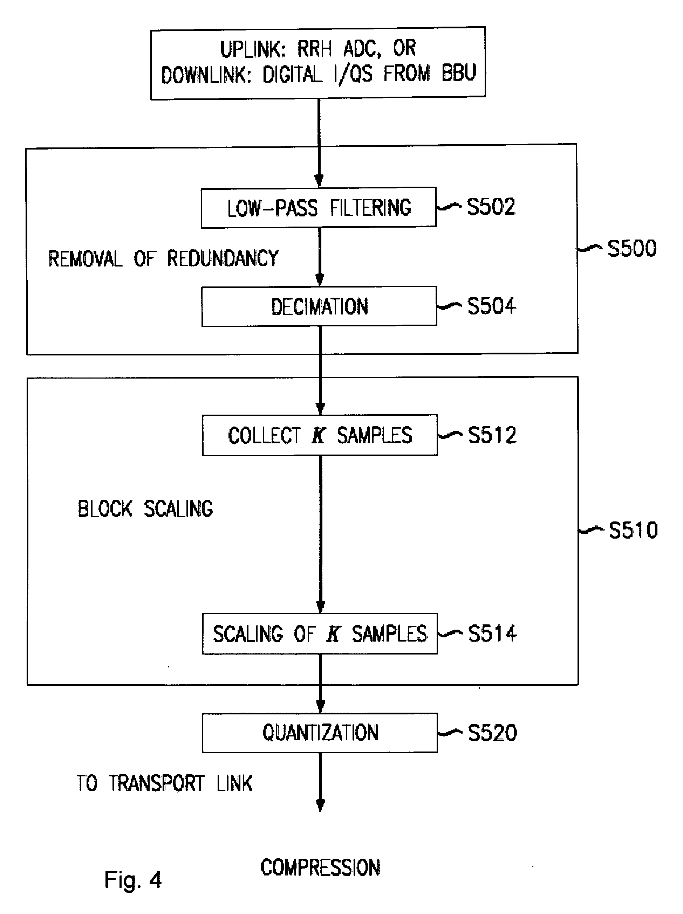

Figure 4 is a flow chart showing the optional compression that advantageously occurs in compressor 22 for example. As shown, the compression involves three main processes, namely removal of redundancies in the spectral domain S500, block scaling S510 and quantization S520. Each process will be described in detail below.

Removal of redundancies in the spectral domain- S500

Conventionally, the sampling rate of the ADC 16, DAC 18 and BBU 12 processing is higher than the minimum required according to the Nyquist sampling theorem. For example, in a 10 MHz LTE (Long Term Evolution) system, the sampling rate is 15.36 MHz (both for the BBU processing and in the case of CPRI uncompressed transmission). Furthermore, for UMTS/HSPA as well as cdma2000/EV-DO, 2-time and 4-time oversampling is customary. This results in redundancies in the spectral or frequency domain. Namely, in the uncompressed form, a spectrally broader signal is transmitted than what may be necessary. Consequently, process S500 removes these redundancies. As shown in Fig. 4, the removal process includes low-pass filtering S502 the digital base band signal followed by decimation S504. In one embodiment, these processes are performed in a streaming fashion, sample-by-sample. For example, in one embodiment, the filtering S502 is performed by a finite-impulse response (FIR) filter, and decimation S504 is performed by up- and down-sampling. The filtering S502 and decimation S504 will depend on the base band signal, and particularly, the frequency band and amount of oversampling. Conceptually, this is not exclusive to a particular wireless technology (for example Universal Mobile Telecommunications System (UMTS), Long Term Evolution (LTE) etc). Particular parameters (e.g., bandwidth and sampling rate) are specified for a given wireless technology. Furthermore, the low-pass filter parameters are selected empirically or by design choice to balance and/or optimize complexity-versus-performance tradeoff.

Block scaling - S510

Block scaling S510 may also be called block floating-point. Here, a block of K I/Q samples output from the decimation operation S504 are collected in step S512. The block of $K$ I/Q samples is then divided by a scaling factor in step S514.

The scaling factor may be a fixed number of bits, the value of which may vary block-by-block.

For example, block scaling (step S510) is performed on a 24-sample block, with 16 bits used to represent the scaling factor. In this embodiment, in each block of $K = 24$ samples, a sample with the largest absolute value is determined. That particular value is quantized with 16-bit resolution, and denoted as $A_m$. The corresponding scaling factor may be determined as shown by the equation below (where $Nb$ denotes bit-resolution):

$$S = 2^{Nb-1}/A_m.$$

Each sample in the block is then multiplied by the above scaling factor. This equation may also be used to determine the scaling factor in any of the described embodiments.

Also, the block length K is a design parameter and may be derived from a trade-off analysis between desired signal quality (e.g., EVM and ACPR) and transport data rates. In one embodiment, the block length K may be fixed. However, as will be discussed in greater detail below. The block length is not limited to being fixed. Instead, the block length may be dynamically and/or adaptively determined. Because the scaling factor, and possibly the block length, may change, one or more of these parameters may be transmitted adding to overhead. For example, the scaling factor may be transmitted once every $K$ I/Q samples. Lowering the block length $K$ will lower the subsequent quantization error, while increasing the transmission overhead. Therefore, the block length K is a design parameter derived from the trade-off analysis between the required signal quality and transport data rates.

Quantization - S520

After the block scaling S510, I/Q samples are quantized using a quantizer with $N_b$-bit resolution per each complex component. In this example, the number of bits representing a sample is truncated to the $N_b$ most significant bits. This operation is performed sample-by-sample.

Alternatively, a simple linear (i.e., uniform) quantizer may be applied. However, application of a quantizer with the optimized distances between the quantization levels will result in lower quantization error, and improved signal quality. One example of a non-linear (i.e., non-uniform) quantizer is presented with respect to pseudo code (A) below. In that case, the quantization levels are optimized in conjunction with the above block scaling.

Higher resolution will improve the signal quality (i.e., lower quantization noise), while increasing the transport data rates. Therefore, the resolution $N_b$ is a design parameter derived from the trade-off analysis between the required signal quality and data rates.

Note that different parameters may be used to achieve desired performance on the uplink and downlink. For example, higher quantizer resolution and shorter block length are expected in the uplink case because the uplink signal is expected to have a larger dynamic range, as well as additive noise and interference present.

Conversion of compressed CPRI frames to ODU2 format

As shown in Figure 3, directed by the switch 26 and MUX/DEMUX 28 multiple CPRI frames are aggregated together and sent encapsulated within a single Optical Data Unit (ODU2). The switch 26 acts to direct the compressed CPRI frames. The MUX/DEMUX 28 acts to multiplex multiple Compressed CPRI frames into shared channels so that there are fewer outputs than inputs, and less bandwidth is used for transmission in consequence (in other words, less "lambda").

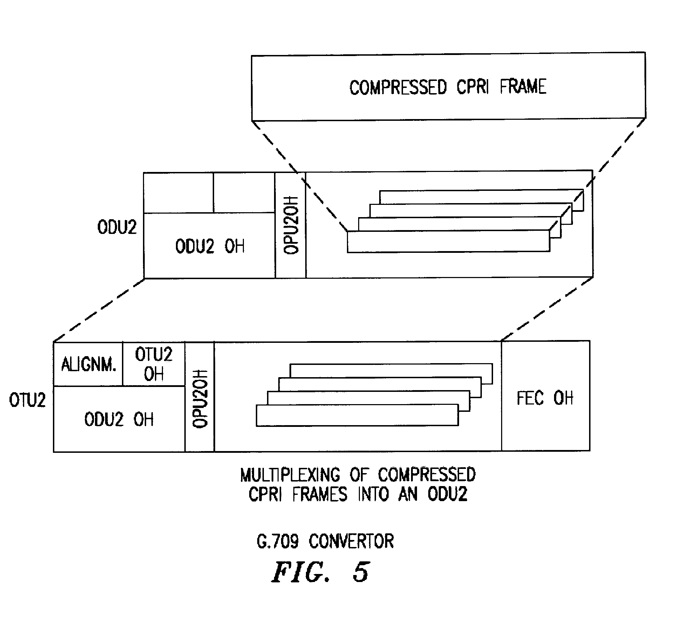

As shown in more detail in Figure 5, once compressed, multiple CPRI frames from multiple of the links are inserted together into the payload of an ODU2 frame for transmission. This can be considered an "xCPRI framing" whereby multiple CPRI frames after compression are concatenated together then the resulting data is subject to G.709 encapsulation so as to provide an ODU2 frame.

The ODU2 frame includes ODU2 overhead and Optical Channel Payload Unit (OPU2) overhead in addition to the multiple CPRI frames. As shown in Figure 5, additional alignment and overhead data is added and Forward Error Correction (FEC) is added, for transmission as an Optical Transport Unit (OTU2).

Referring back to Figure 3, it will be seen that in this example the CPRI links and hence frames are concatenated into two output ODU2 and hence two OTU2 (denoted 38 in Figure 3). These are denoted ACTIVE in Figure 3. In addition for each OTU2 frame a duplicate frame is sent via a second path (denoted PROTECTION) for protection purpose to help ensure correct transmission. The OTU2s 34 are output via output ports 36 into the optical network network (not shown in Figure 3).

By the way, Operations &Management (OAM) information (if any) that needs to be transmitted via the optical network between interface units is included in the known control channels GCC1 or GCC2 in the ODU2 standard format.

Processing upon reception

The following describes as example the upstream case.

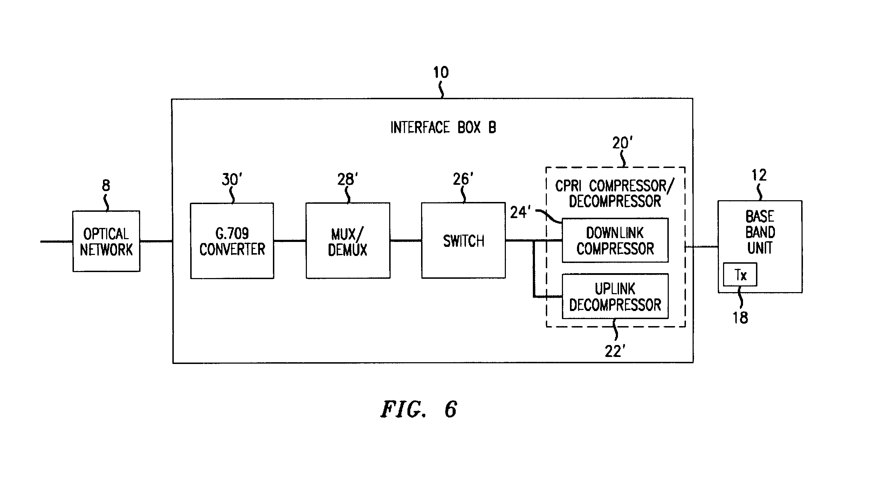

As shown in Figure 6, the OTU2 frames are transported over the optical network 8 and received by the second interface unit 10. The second interface unit includes a G.709 converter 30' connected to a MUX/DEMUX 28' which is connected to a switch 26'. The switch is connected to an uplink decompressor 20' and a downlink compressor 22' of a CPRI compressor/decompressor 20'.

This second interface unit 10 essentially acts in this uplink direction to reverse the processing steps undertaken in the first interface unit 6. The G.709 converter 30' acts to de-encapsulate the concatenated compressed CPRI data by removing OTU2 and ODU2 headers, FEC etc. The resulting data stream is then demultiplexed in the MUX/DEMUX 28' to provide the compressed CPRI frames. The switch 26' then sends the compressed CPRI frames to the uplink decompressor 22'.

Decompression

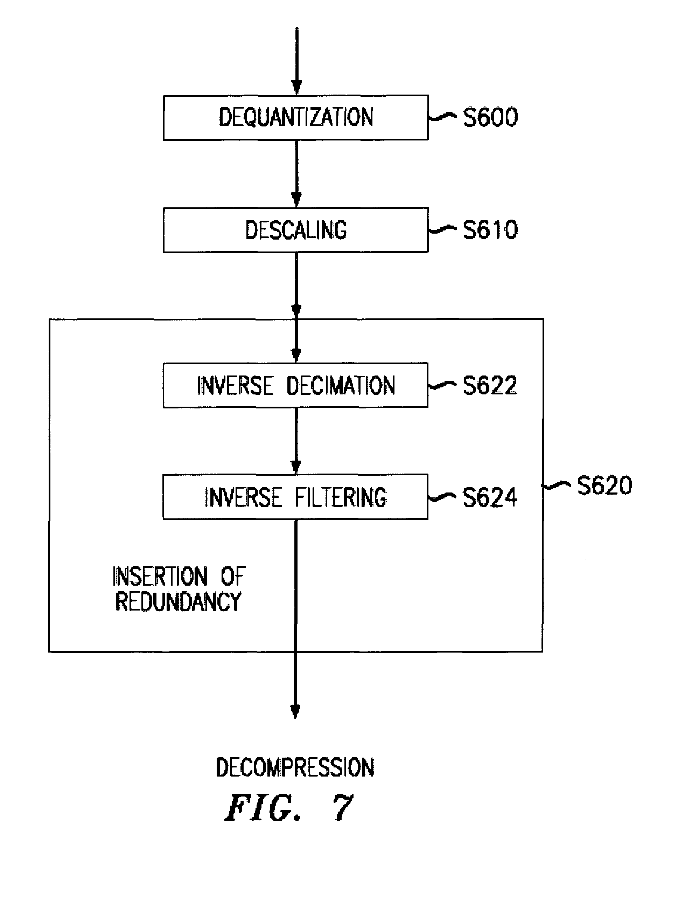

As shown in Figure 7, decompression involves three main processes: dequantization S600, descaling S610, and insertion of redundancies S620, i.e., up-sampling. Each process will be described below.

During dequantization S600, the inverse of the quantization operation is performed. Namely, the number of bits used to represent a sample is increased to the same resolution prior to quantization in step S520. In this embodiment, this is performed by adding zeros as least significant bits. Alternatively, the inverse of the quantization process conducted in step S520 may be performed. For example, the inverse of the pseudo code (A) shown below may be performed if quantization in Step S520 proceeds as set forth in pseudo code (A).

During descaling S610, a block of K samples from the dequantization S600 are collected and multiplied by the scaling factor.

During insertion of redundancies S620, each sample from the descaling S610 undergoes inverse decimation S622, which is the inverse of the decimation in step S504. Similarly, the resulting samples are inverse filtered in S624, where the "filtering" is the inverse of the filtering performed in step S502. This is an up-sampling procedure.

Subsequent Processing

After this demultiplexing and decompression, the decompressed CPRI frames are then passed to the conventional base band unit 12 via a corresponding number of CPRI links as between the remote radio heads 4 and first interface unit 6. At the conventional base band unit 12, the receive base-band processing (i.e. physical layer processing) is undertaken.

Handling of Alarms due to faulty operation and other Operations and Management signalling

For completeness, we would mention that the interface unit 6 at the remote radio head side (and the interface unit 10 at the base band unit 12 side) each include Ethernet ports (60 on Figure 3). These ethernet ports are used to tunnel Ethernet data flow between the radio head side and the base band unit side, for example backhauling information or data collected on the radio head side. For example, this information is tunnelled by the interface unit 6, either inside the OAM channel (control channels GCC1 or GCC2 of the Optical Data Unit ODU2) or multiplexed with the CPRI data inside the ODU2 payload, so as to be made available to the interface unit 10 at the base band unit 12 side.

At the base band unit 12 side, similarly the interface unit 10 also has Ethernet ports (not shown) which are used to connect to the base band unit 12 for control purposes.

Wavelength Division Multiplexing (WDM) unit functionality

The WDM units 5, 11 are configured to work as multiplexers and/or as demultiplexers, depending on the direction(s) of the data flow. IN general fashion, even if, in the following, one direction is privileged for description purpose, the WDM units 5, 11 have bidirectional ports, for up - and downlink on a same optical fibre.

In multiplexing mode, they receive optical signals, here ODU2 signals from at least two inputs, perform the multiplexing of the two received signals using wavelength division multiplexing, and emit the obtained multiplexed signal in an output.

In demultiplexing mode, they receive a multiplexed signal via an input, perform the demultiplexing using wavelength selective filters, and emit the demultiplexed signals in separate outputs.

In particular, for a considered WDM unit 5 or 11, the input interfaces in multiplexing mode are used as output interfaces in demultiplexing mode, and the output interface in multiplexing mode is used as input interface in demultiplexing mode.

The first WDM unit 5, situated on the antennae 4 side of the optical line structure 9 multiplexes in upstream direction the signals coming from the first interface unit 6 and from the ONTs 7 in a signal sent to the optical line structure 9. The ONTs 7 may in particular emit GPON (Gigabit Passive Optical Network) or XGPON (ten Gigabit Passive Optical Network), uplink signals, and receive the corresponding downlink signals.

The first WDM unit 5 demultiplexes in downstream direction the multiplexed signal coming from the second WDM unit 11 via optical line structure 9 to extract the signals destined respectively to the ONTs 7 on one hand and the signal destined to the interface unit 6 and from there to the RRH 4. The multiplexed signal may in particular contain GPON or XGPON downlink signals, CATV (Cable TV) signals, or an OTDR (Optical Time Domain Reflectometer) signal, destined to be received by the ONTs 7.

The second WDM unit 11, situated on the BBU 12 side of the optical line structure 9 multiplexes in downstream direction the signals coming from the BBU 12 and from the OLT 13. The OLT 13 may in particular provide G.709 compliant GPON or XGPON downlink signals, CATV signals, and/or an OTDR signal.

The second WDM unit 11 demultiplexes in upstream direction the multiplexed signal coming from the first WDM unit 5 via optical line structure 9 to extract the signals destined respectively to the OLT 13 on one hand, and to the BBU 12 via second interface box 10 on the other hand.

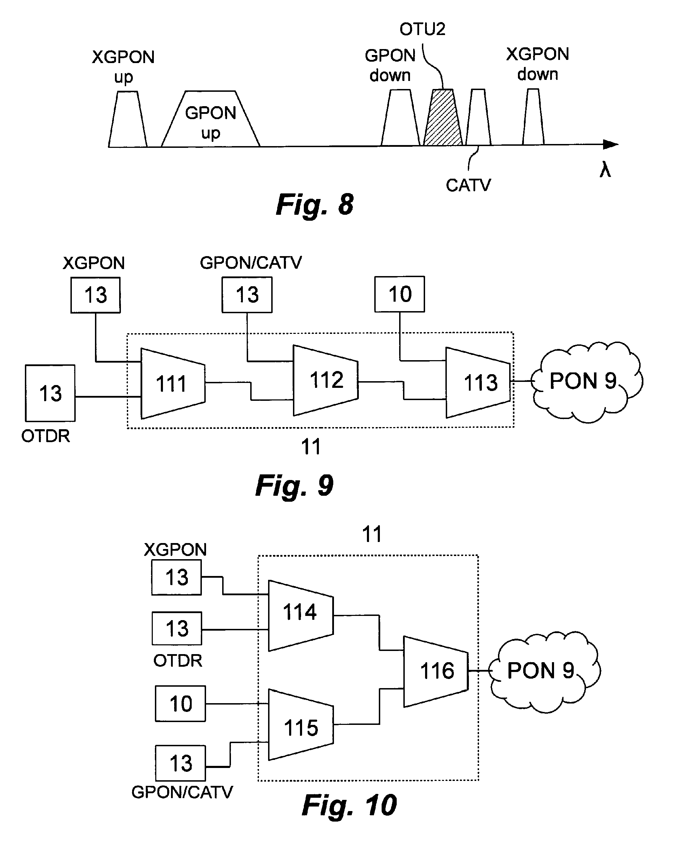

Figure 8 displays an example of a spectrum for a signal as may be used in the optical line structure 9. On figure 8, the occupied bandwidth domains are represented on a graph line of the wavelength ($\lambda$) by trapezoids drawn on said line on the corresponding domains, representing the transported light at the corresponding wavelengths.

From left to right are represented : the XGPON uplink signal which is a single wavelength at approximately 1270+/-10nm, the GPON uplink signal which is a single wavelength in the domain from approximately 1310+/-20nm, the GPON downlink signal which is a single wavelength at approximately 1490+/-10nm, the OTU2 frames signal between the two interface units 6, 10 which is a single wavelength in the domain from approximately 1520 to 1550nm (uplink and downlink), the CATV signal which is a single wavelength in the domain from approximately 1550 to 1560nm and a the monochromatic OTDR signal beyond, in particular around 1625nm.

The bandwidth domain comprised between 1500 and 1550 nm is unused in the already deployed optical line structures 9, so that occupying said domain allows the transmission of the OTU2 frames signal without occupying the intermediary domain from approximately 1330 to 1480nm where the attenuation of the usual fibres is the most important.

Of course, if one of the previously mentioned signals (GPON, XGPON, CATV in particular) is absent in the optical network 8, the corresponding bandwidth domain may also be dedicated to the OTU2 frames signal conveying.

The use of this multiplexing feature allows to convey the OTU2 frames signal using already deployed optical networks 8 and optical line structures 9.

Wavelength Division Multiplexing (WDM) unit apparatus

Figures 9 and 10 show as examples two ways to realise embodiments of multiple entry WDM units 5, 11.

The represented WDM unit is connected to multiple interfaces, here the OLT 13 and ONTs 7 corresponding to the different signals GPON/CATV, XGPON, OTDR and the interface with the corresponding interface units 6 & 11. As already mentioned, the elements herein have bidirectional ports connected to a single fibre conveying up- and downlink using wavelength division.

In the first represented embodiment of figure 9, the WDM unit 11 comprises elementary two entry multiplexers 111, 112, 113 in series. In the serial architecture, the elementary multiplexers 111, 112 and 113 are arranged so that the multiplexed output of one of them is one of the unmultiplexed inputs of the next one.

On figure 9, in multiplexing mode the first elementary multiplexer 111 receives as unmultiplexed input the OTDR signal and the XGPON signal. The second elementary multiplexer 112 receives as unmultiplexed input the multiplexed output of the first elementary multiplexer 111 and the GPON and CATV signal. The third elementary multiplexer 113 receives as unmultiplexed input the multiplexed output of the second elementary multiplexer 112 and the OTU2 frames signal produced by the interface unit 10 (or 6). The multiplexed output of the third elementary multiplexer 113 goes to the optical line structure 9.

The demultiplexing occurs in the obvious reverse fashion. The first and possibly the second elementary multiplexers 111 and 112 may in particular be located in different places from the third and/or be part of separate units. This architecture may in particular be implemented as an overlay on the already existent networks.

In this architecture, the OTU2 frames signal, connected to the elementary multiplexer 113 closest to the final output is favoured with regard to the other signals as it undergoes less insertion loss.

On figure 10, elementary multiplexers 114, 115, and 116 are in a cascading architecture, where the two first elementary multiplexers 114 and 115 receive as unmultiplexed input the OTDR, XGPON, GPON and CATV and OTU2 frames signals. The elementary multiplexers multiplex respectively two of the signals.

The third elementary multiplexer 116 receives as inputs the multiplexed outputs of the two first elementary multiplexers 114, 115. The output of the third elementary multiplexer 116 goes to the optical line structure 9.

In this architecture, none of the signals is favoured.

Two way functionality

The path from remote radio-head (RRH) 4 to base band unit 12 has been explained in detail, but there is also a path in the opposite direction, namely from base band unit 12 to remote radio-head 4. These are denoted uplink and downlink respectively.

The uplink goes as follows :

- the first interface unit 6 converts the digitized radio signal here in particular optic CPRI signal of the remote radio head 4 into a digital optical signal, here OTU2 frames,

- the first wavelength division multiplexing unit 5 multiplexes the first optical transport signal with a second optical signal from an optical network termination ONT 7 of a passive optical network 8,

- the optical lines structure 9 transmits the multiplexed digital optical signal to a second wavelength division multiplexing unit 11,

- the second wavelength division multiplexing unit 11 demultiplexes the digital optical signal from the multiplexed optical signals,

- the second interface unit 10 converts the isolated digital optical signal into a digital electronic signal (e.g. CPRI over coaxial cables) and transmits the digital electronic or optical signal to at least one baseband unit 12.

The downlink goes as follows :

- the baseband unit 12 emits a digitized radio (CPRI) signal,

- the second interface unit 10 converts the digitized radio signal into a first optical transport signal (OTU2) and transmits the converted optical transport signal to second wavelength division multiplexing unit 11,

- the second wavelength division multiplexing unit 11 multiplexes the first optical transport signal with a signal from an optical line termination 13 of the optical network 8,

- the optical line structure 9 transmits the digital optical signal to the first wavelength division multiplexing unit 5 of the optical network 8,

- the first wavelength division multiplexing unit 5 demultiplexes the first optical transport signal from the multiplexed optical signal,

- the first interface unit 6 converts the first optical transport signal into a digitized radio signal, and sends said signal to a remote radio head 4.

Some alternative implementations

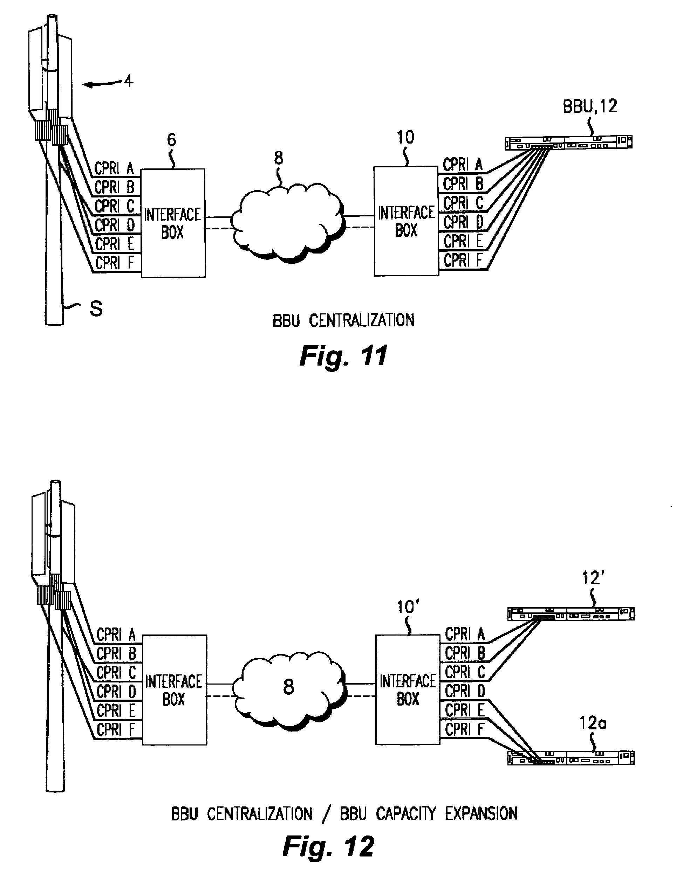

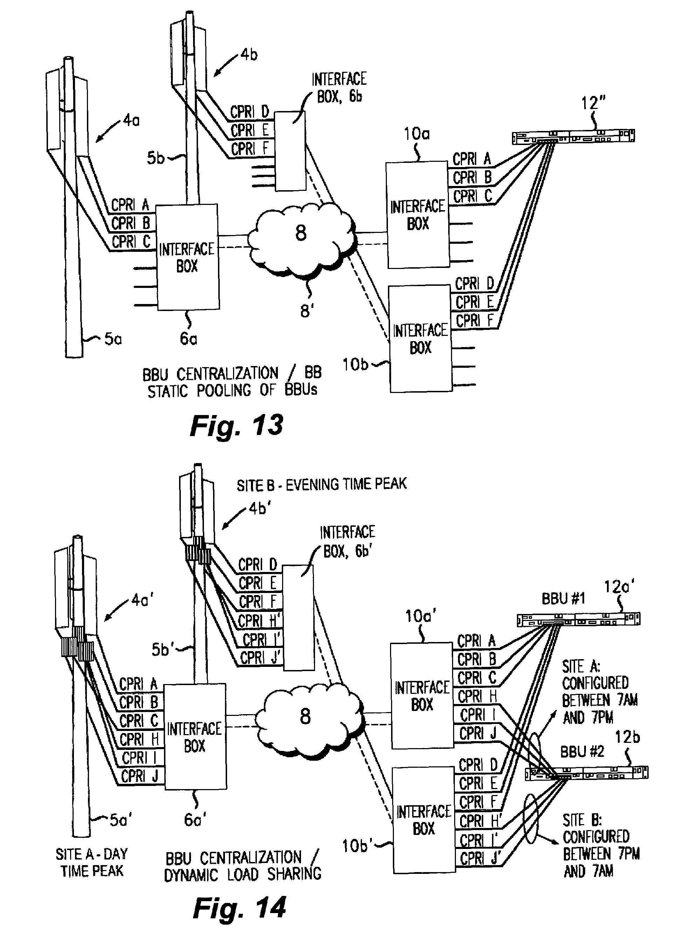

In the example described above with reference to Figures 1 to 10, a single first interface unit 6 is connected to remote radio heads 4 of one cell site 5 and a single second interface unit 10 is connected to a single base band unit 12 (this is illustrated in Figure 11). However, alternatives are possible, for example as follows.
As shown in Figure 12, the second interface unit 10 is connected so that some of its outputs are to the base band unit 12' and others of its outputs are to a second base band unit 12a. This allows multiple base band units to be involved, readily expanding base band unit capacity. As shown in Figure 13, two first interface units 6a, 6b connect two sets of remote radio-heads (RRH) 4a, 4b from different cell sites 5a, 5b to the optical network 8' and two second interface units 10a, 10b both connect to a base band unit 12". The allocation of CPRI links to the base band unit 12" is static but the base band unit 12" is shared by both the first interface unit 6a to second interface unit 10a system, and the first interface unit 6b to second interface unit 10b system. Appropriate allocation of CPRI links to base band units requires knowledge of the statistical distribution of traffic and of the number of remote radio heads RRH to be served.
As shown in Figure 14, in another scenario, a second base band unit 12b is shared between the two sets of remote radio-heads (RRH) 4a',4b' from different cell sites 5a',5b' according to the time of day. From 7am to 7pm (daytime), selected CPRI links H,I,J from a first remote radio-head (RRH) 4a' go to a second base band unit BBU#2 via the optical network whilst other selected CPRI links A,B,C from the first remote radio-head (RRH) 4a' go to the first BBU#1. Conversely, from 7pm to 7am (night-time) selected CPRI links H',I',J' from the second remote radio-head (RRH) 4b' go to a second base band unit BBU#2 via the optical network whilst other selected CPRI links D,E,F from the second remote radio-head (RRH) 4b' go to the first BBU#1. It can be considered that the first remote radio-head (RRH) 4a' is better served in the daytime whereas the second remote radio-head (RRH) 4b' is better served in the evening. This approach can be considered as dynamic load sharing between BBUs 12 and RRHs 4 by appropriate switching by the interface units 10a', 10b' between the optical network and BBUs 12.
The particular examples shown in Figures 12 to 14, involve a doubling-up of first and/or second interface units 6, 10 etc, however, in other examples any number of first interface units 6, second interface units 10, remote radio-heads (RRH) 4 and base band units 12 may be used.
It will be understood that further examples are possible. For example, two or more first interface units can be used to connect two or more remote radio heads, via the optical network and a single second interface unit, to a single base band unit.
In the event of a fault, as may be signalled in the ODU2, using GCC1 or GCC2 messaging, an interface unit receiving the ODU2 can switch its outputs for fault management purposes, for example to avoid sending digital data frames to a known-to-be-faulty base band unit.

General

The above described examples involve CPRI, however in further examples other digital data formats may be used instead, for example Open Base Station Architecture Initiative (OBSAI) or Open Radio Initiative (ORI).
The example embodiments are applicable to different wireless technologies, for example 3GPP (Third Generation Partnership Project) Long Term Evolution (LTE), LTE-Advanced, Universal Mobile Telecommunications System (UMTS) such as High Speed Packet Access (HSPA), as well as on the uplink and downlink.
The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalence of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. Method to transmit a signal from a mobile network antenna remote radio head (4) to a base band unit (12) with the steps:

   - a first interface unit (6) converts a digitized radio signal of the remote radio head (4) into a first optical transport signal,
   - a first wavelength division multiplexing unit (5) multiplexes the first optical transport signal with a second optical transport signal from an optical network termination (7) of an optical network (8),
   - an optical line structure (9) transmits the multiplexed optical signals to a second wavelength division multiplexing unit (11),
   - the second wavelength division multiplexing unit (11) demultiplexes the first optical transport signal from the multiplexed optical signals,
   - a second interface unit (10) converts the first optical transport signal into a digitized radio signal and transmits the digitized radio signal to at least one base band unit (12).

2. Method to transmit a signal from a base band unit (12) to a mobile network antenna remote radio head (4) with the steps:

   - at least one base band unit (12) emits a digitized radio signal,
   - a second interface unit (10) converts the digitized radio signal into a first optical transport signal and transmits said optical transport signal to second wavelength division multiplexing unit (11),
   - the second wavelength division multiplexing unit (11) multiplexes the first optical transport signal with a second optical transport signal from an optical line termination (13) of a passive optical network (8),
   - an optical line structure (9) transmits the optical transport signal to a first wavelength division multiplexing unit (5) of the optical network (9),
   - the first wavelength division multiplexing unit (5) demultiplexes the first optical transport signal from the multiplexed optical signals,
   - a first interface unit (4) converts the first optical transport signal into a digitized radio signal, and sends said digitized radio signal to a remote radio head (4).

3. Method according to claim 1 or 2, wherein the digitized radio signal is a Common Public Radio Interface (CPRI) protocol signal.

4. Method according to claim 1, 2 or 3, wherein the first optical transport signal is an Optical Transmission Unit 2 (OTU2) signal.

5. Method according to any of claims 1 to 4, wherein the second optical transport signal is one of the following : a Gigabit Passive Optical Network (GPON) signal, a ten Gigabit Passive Optical Network (XGPON) signal, an Optical Time domain Reflectometer (OTDR) signal or a CAble TeleVision (CATV) signal.

6. Method according to any of claims 1 to 4, wherein the optical transport signal is in the wavelength domain between 1500 and 1550nm.

7. Method according to any of claims 1 to 5, wherein the first interface unit (6) collects and aggregates the digitized radio signal emitted by multiple remote radio heads (4) and converts the aggregated digital electronic signals into the first optical transport signal and converts the first optical transport signal into digitized radio signals and distributes them to the respective remote radio heads (4)

8. Telecommunication network comprising :

   - at least one remote radio head (4) configured to convert an analogue radio signal from an antenna (20) into a digitized radio signal,
   - a first interface unit (6) connected to the remote radio head (4) and configured to convert the digitized radio signal into a first optical transport signal and vice-versa,
   - an optical network (8) comprising :

      - a first wavelength multiplexing unit (5) connected to the interface unit (6), configured to multiplex and/or demultiplex the first optical transport signal from or into a multiplexed optical signal with at least a second optical transport signal,
- an optical network termination (7) connected to the interface unit (6), configured to emit and/or receive the second optical transport signal,
- an optical line structure (9) connected to the first wavelength multiplexing unit (11),
- a second wavelength multiplexing unit (11) connected to the optical line structure (9), configured to multiplex and/or demultiplex the first optical transport signal from or into a multiplexed optical signal with at least the second optical transport signal,
- an optical line termination (13), configured to emit and/or receive the second optical transport signal,

- a second interface unit (10)configured to convert the optical transport signal into a digitized radio signal and vice-versa,
- and at least one base band unit (BBU) connected to the second interface unit (10) configured to receive and/or emit the digitized radio signal.

9. Telecommunication network according to claim 8, comprising a plurality of remote radio heads (4) of mobile network antennae (20) connected to the first interface unit (6), and in which the first interface unit (10) is configured to collect and aggregate the digitized radio signal emitted by the remote radio heads (4) and convert the aggregated digital electronic signals in a first optical transport signal, and to convert the first optical transport signal into a plurality of digitized radio signals and scatter the digitized radio signals to the plurality of remote radio heads (4).

10. Telecommunication network according to claim 8 or 9, **characterized in that** at least one of the wavelength multiplexing units (5, 11) comprises elementary two entry multiplexers (111, 112, 113) arranged in serial fashion.

11. Telecommunication network according to claim 8, 9 or 10, **characterized in that** at least one of the wavelength multiplexing units (5, 11) comprises elementary two-entry multiplexers (114, 115, 116) arranged in cascading fashion.

**Amended claims in accordance with Rule 137(2) EPC.**

1. Method to transmit a signal from a mobile network antenna remote radio head (4) to a base band unit (12) with the steps:

- a first interface unit (6) converts a digitized radio signal of the remote radio head (4) into a first optical transport signal,
- a first wavelength division multiplexing unit (5) multiplexes the first optical transport signal with a second optical transport signal from an optical network termination (7) of a passive optical network (8),
- an optical line structure (9) transmits the multiplexed optical signals to a second wavelength division multiplexing unit (11),
- the second wavelength division multiplexing unit (11) demultiplexes the first optical transport signal from the multiplexed optical signals,
- a second interface unit (10) converts the first optical transport signal into a digitized radio signal and transmits the digitized radio signal to at least one base band unit (12).

2. Method to transmit a signal from a base band unit (12) to a mobile network antenna remote radio head (4) with the steps:

- at least one base band unit (12) emits a digitized radio signal,
- a second interface unit (10) converts the digitized radio signal into a first optical transport signal and transmits said optical transport signal to second wavelength division multiplexing unit (11),
- the second wavelength division multiplexing unit (11) multiplexes the fist optical transport signal with a second optical transport signal from an optical line termination (13) of a passive optical network (8),
- an optical line structure (9) transmits the optical transport signal to a first wavelength division multiplexing unit (5) of the optical network (9),
- the first wavelength division multiplexing unit (5) demultiplexes the first optical transport signal from the multiplexed optical signals,
- a first interface unit (4) converts the first optical transport signal into a digitized radio signal, and sends said digitized radio signal to a remote radio head (4).

3. Method according to claim 1 or 2, wherein the digitized radio signal is a Common Public Radio Interface (CPRI) protocol signal.

4. Method according to claim 1, 2 or 3, wherein the first optical transport signal is an Optical Transmission Unit 2 (OTU2) signal.

5. Method according to any of claims 1 to 4, wherein the second optical transport signal is one of the following : a Gigabit Passive Optical Network (GPON) signal, a ten Gigabit Passive Optical Network (XGPON) signal, an Optical Time domain Reflectometer (OTDR) signal or a CAble Television (CATV) signal.

**6.** Method according to any of claims 1 to 4, wherein the optical transport signal is in the wavelength domain between 1500 and 1550nm.

**7.** Method according to any of claims 1 to 5, wherein the first interface unit (6) collects and aggregates the digitized radio signal emitted by multiple remote radio heads (4) and converts the aggregated digital electronic signals into the first optical transport signal and converts the first optical transport signal into digitized radio signals and distributes them to the respective remote radio heads (4)

**8.** Telecommunication network comprising :

    - at least one remote radio head (4) configured to convert an analogue radio signal from an antenna (20) into a digitized radio signal,
    - a first interface unit (6) connected to the remote radio head (4) and configured to convert the digitized radio signal into a first optical transport signal and vice-versa,
    - an optical network (8) comprising :

        - a first wavelength multiplexing unit (5) connected to the interface unit (6), configured to multiplex and/or demultiplex the first optical transport signal from or into a multiplexed optical signal with at least a second optical transport signal,
        - an optical network termination (7) connected to the interface unit (6), configured to emit and/or receive the second optical transport signal,
        - an optical line structure (9) of a passive optical network connected to the first wavelength multiplexing unit (11),
        - a second wavelength multiplexing unit (11) connected to the optical line structure (9), configured to multiplex and/or demultiplex the first optical transport signal from or into a multiplexed optical signal with at least the second optical transport signal,
        - an optical line termination (13), configured to emit and/or receive the second optical transport signal,

    - a second interface unit (10) configured to convert the optical transport signal into a digitized radio signal and vice-versa,
    - and at least one base band unit (BBU) connected to the second interface unit (10) configured to receive and/or emit the digitized radio signal.

**9.** Telecommunication network according to claim 8, comprising a plurality of remote radio heads (4) of mobile network antennae (20) connected to the first interface unit (6), and in which the first interface unit (10) is configured to collect and aggregate the digitized radio signal emitted by the remote radio heads (4) and convert the aggregated digital electronic signals in a first optical transport signal, and to convert the first optical transport signal into a plurality of digitized radio signals and scatter the digitized radio signals to the plurality of remote radio heads (4).

**10.** Telecommunication network according to claim 8 or 9, **characterized in that** at least one of the wavelength multiplexing units (5, 11) comprises elementary two entry multiplexers (111, 112, 113) arranged in serial fashion.

**11.** Telecommunication network according to claim 8, 9 or 10, **characterized in that** at least one of the wavelength multiplexing units (5, 11) comprises elementary two-entry multiplexers (114, 115, 116) arranged in cascading fashion.

Fig. 1

Fig. 2

Fig. 3

UPLINK: RRH ADC, OR
DOWNLINK: DIGITAL I/QS FROM BBU

REMOVAL OF REDUNDANCY

LOW-PASS FILTERING ← S502

DECIMATION ← S504

← S500

BLOCK SCALING

COLLECT *K* SAMPLES ← S512

SCALING OF *K* SAMPLES ← S514

← S510

QUANTIZATION ← S520

TO TRANSPORT LINK

COMPRESSION

Fig. 4

COMPRESSED CPRI FRAME

ODU2

ODU2 OH

OPU2OH

OTU2

ALIGNM. | OTU2 OH

ODU2 OH

OPU2OH

FEC OH

MULTIPLEXING OF COMPRESSED
CPRI FRAMES INTO AN ODU2

G.709 CONVERTOR

*FIG. 5*

*FIG. 6*

DEQUANTIZATION — S600

DESCALING — S610

INVERSE DECIMATION — S622

INVERSE FILTERING — S624

S620

INSERTION OF
REDUNDANCY

DECOMPRESSION

*FIG. 7*

XGPON
up

GPON
up

OTU2

GPON
down

XGPON
down

CATV

λ

**Fig. 8**

XGPON

13

GPON/CATV

13

10

13

OTDR

111

112

113

PON 9

11

**Fig. 9**

11

XGPON

13

13

OTDR

10

13

GPON/CATV

114

115

116

PON 9

**Fig. 10**

BBU CENTRALIZATION

*Fig. 11*

BBU CENTRALIZATION / BBU CAPACITY EXPANSION

*Fig. 12*

BBU CENTRALIZATION / BB
STATIC POOLING OF BBUs

**Fig. 13**

SITE A - DAY TIME PEAK

BBU CENTRALIZATION / DYNAMIC LOAD SHARING

**Fig. 14**

## EUROPEAN SEARCH REPORT

Application Number

EP 13 29 0037

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/083512 A1 (WAKE DAVID [GB]) 20 April 2006 (2006-04-20) * paragraph [0001] * * paragraph [0011] - paragraph [0013] * * paragraph [0027] - paragraph [0030]; figures 3,4 * * paragraph [0035] * * paragraph [0042] - paragraph [0053]; figures 5,9,10,11 * | 1-11 | INV. H04J14/02 H04B10/2575 |
| X | EP 2 416 506 A1 (HUAWEI TECH CO LTD [CN]) 8 February 2012 (2012-02-08) * paragraph [0001] - paragraph [0009]; figures 2a,2b * * paragraph [0022] - paragraph [0045]; figures 3,4,5a,5b,6 * * paragraph [0047] - paragraph [0051]; figures 8a,8b * | 1-11 | |
| X | US 2013/004176 A1 (SATO TAKAASKI [JP] ET AL) 3 January 2013 (2013-01-03) * paragraph [0001] * * paragraph [0028] - paragraph [0054]; figures 2,3,4 * * paragraph [0074] - paragraph [0133]; figures 5,6,7 * | 1-11 | TECHNICAL FIELDS SEARCHED (IPC) H04J H04B |
| X | US 2011/268446 A1 (CUNE WILLIAM P [US] ET AL) 3 November 2011 (2011-11-03) * paragraph [0007] - paragraph [0013] * * paragraph [0034] - paragraph [0043]; figures 1,2 * * paragraph [0048] - paragraph [0050]; figure 4 * * paragraph [0065] - paragraph [0070]; figures 10a,10b,11 * | 1-11 | |

-/--

The present search report has been drawn up for all claims

| Place of search | Date of completion of the search | Examiner |
|---|---|---|
| The Hague | 21 June 2013 | Roldán Andrade, J |

Europäisches
Patentamt

European
Patent Office

Office européen
des brevets

# EUROPEAN SEARCH REPORT

Application Number

EP 13 29 0037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAVID GHAZISAIDI ET AL: "Survivability Analysis of Next-Generation Passive Optical Networks and Fiber-Wireless Access Networks", IEEE TRANSACTIONS ON RELIABILITY, IEEE SERVICE CENTER, PISCATAWAY, NJ, US, vol. 60, no. 2, 1 June 2011 (2011-06-01), pages 479-492, XP011325722, ISSN: 0018-9529, DOI: 10.1109/TR.2011.2134210 * page 482, left-hand column, paragraph 4 - page 484, left-hand column, paragraph 2; figures 2,3 * | 1-11 | |

----- 

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 21 June 2013 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 29 0037

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2013

| Patent document cited in search report | | Publication date | Patent family member(s) | | Publication date |
|---|---|---|---|---|---|
| US 2006083512 | A1 | 20-04-2006 | CA | 2584701 A1 | 27-04-2006 |
| | | | CN | 101120525 A | 06-02-2008 |
| | | | EP | 1805913 A2 | 11-07-2007 |
| | | | US | 2006083512 A1 | 20-04-2006 |
| | | | WO | 2006044885 A2 | 27-04-2006 |
| EP 2416506 | A1 | 08-02-2012 | AU | 2009350650 A1 | 01-12-2011 |
| | | | CA | 2761388 A1 | 03-02-2011 |
| | | | CN | 102577187 A | 11-07-2012 |
| | | | EP | 2416506 A1 | 08-02-2012 |
| | | | US | 2012045211 A1 | 23-02-2012 |
| | | | US | 2013129353 A1 | 23-05-2013 |
| | | | WO | 2011011911 A1 | 03-02-2011 |
| US 2013004176 | A1 | 03-01-2013 | JP | 2011228853 A | 10-11-2011 |
| | | | US | 2013004176 A1 | 03-01-2013 |
| | | | WO | 2011129102 A1 | 20-10-2011 |
| US 2011268446 | A1 | 03-11-2011 | NONE | | |

EPO FORM P0459

For more details about this annex : see Official Journal of the European Patent Office, No. 12/82